# EUROPEAN PATENT SPECIFICATION

(11) **EP 1 864 411 B1**
(45) Date of publication and mention of the grant of the patent: **29.09.2010**
(21) Application number: 06708794.0
(22) Date of filing: 17.03.2006
(51) Int. Cl.: H04B 10/20, H04Q 11/00, H04J 14/02

(54) **ADAPTIVE ONT FOR A PON NETWORK**
ADAPTIVES ONT FÜR EIN PON-NETZWERK
ADAPTATEUR ONT POUR UN RESEAU PON

(30) Priority: 31.03.2005 US 667365 P
(43) Date of publication of application: 12.12.2007
(73) Proprietor: SIEMENS AKTIENGESELLSCHAFT, 80333 München (DE)
(72) Inventor: ALI, Scah Walli, Boca Raton, Florida 33482 (US); NAGEL, Thomas, Boca Raton, Florida 33433 (US)
(86) International application number: PCT/EP2006/060832
(87) International publication number: WO 2006/103181

(56) References cited:
- EP-A- 0 869 634
- US-A1- 2004 136 712

## Description

### CROSS-REFERENCE TO RELATED APPLICATIONS

The present application claims the benefit of the provisional patent application filed on March 31, 2005, and assigned application number 60/667,365.

### FIELD OF THE INVENTION

The present invention relates generally to passive optical networks, and more particularly to an adaptive optical network terminal (ONT) for automatically accommodating different types of passive optical networks (PON's).

### BACKGROUND OF THE INVENTION

The use of fiber optic-based networks to carry information signals continues to grow in popularity worldwide. Such networks employ optical data transmitters at a source node for converting electrical signals to optical signals for transmission over the network. At a destination node the optical signals are converted back to electrical form for processing and extracting the information signal.

Optical networks are classified as active or passive. An active optical network comprises intermediate nodes (disposed between the source and destination nodes) for regenerating the optical signal using a receiver/transmitter (i.e., transceiver) that provides optical-to-electrical-to-optical conversion and amplification of the signal in electrical form. A passive optical network (PON) architecture does not employ intermediate nodes, but instead comprises beam splitters and filters to direct the optical signal to its intended destination node.

A PON typically provides multiple data transmission paths, each capable of delivering high-bandwidth data services to multiple users. A PON may be operated according under a variety of different transmission standards, such as a B-PON (broadband passive optical network) or a G-PON (gigabit passive optical network), Each standard may have respective different transmission bandwidths and, transmission speeds and may include respective different media access control (MAC) information and operation, administration and management (OAM) information encoding schemes.

A PON network typically includes an optical line terminal (OLT) at a network head end and a plurality of optical network terminals (ONT's) located at or proximate a subscriber's site. Each ONT may connect to several subscribers, permitting each subscriber to access the passive optical network and connect to other networks through the PON. The conventional PON topology comprises a shared upstream signal path and a broadcast downstream path. Downstream data includes an address header and may be encoded with MAC and/or OEM information. The downstream data is broadcast from the OLT to downstream ONT's. All ONT's receive the broadcasted data and each employs an address matching process to identify data intended for it.

The European patent application EP 0 869 634 A2 concerns wavelength-division multiplexing in passive optical networks. An optical line termination (OLT) device (12) generates a plurality of optical signals having different respective wavelengths (λ1, λ2), each optical signal carrying data, and wavelength-division-multiplexes the optical signals. A plurality of optical network units (ONUs,14₁-14₅) are connected to the OLT device (12) by way of a passive optical network (6) so as to receive the wavelength-division-multiplexed optical signals. Each ONU (14) has a wavelength selection unit operable in dependence upon control information sent from the OLT (12) to the ONU (14) concerned by way of the passive optical network (6) to select one of the optical signals of the plurality, and also has a detector for processing the selected optical signal to derive therefrom the data carried thereby.

The control information may be included in the data-carrying optical signals themselves as overhead information, or may be sent separately by another optical signal that is wavelength-division multiplexed with the data-carrying optical signals. Such an arrangement can enable the downstream capacity of the passive optical network to be shared flexibly by the different optical receivers.by the different optical receivers.

### BRIEF DESCRIPTION OF THE DRAWINGS

The invention is explained in following description in view of the drawings that show:
FIG. 1 is an example embodiment of an adaptive ONT.
FIG. 2 is example flow chart for a method for recognizing and adapting to a change in PON format at an ONT.
FIG. 3 is an example flow chart for a PON format discovery process.

### DETAILED DESCRIPTION OF THE INVENTION

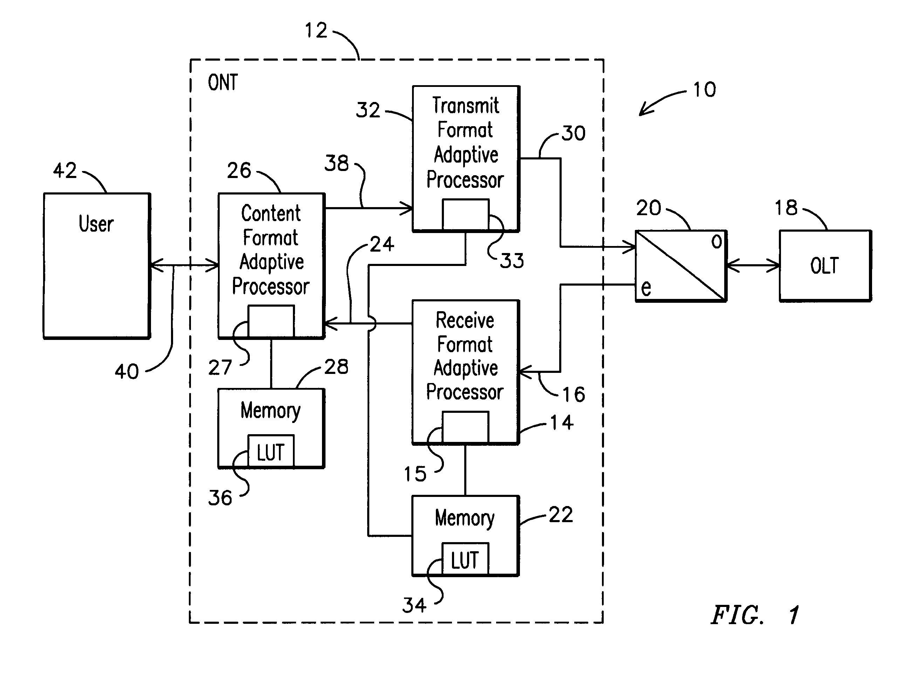

Typically, PON ONT's are designed to support specific PON standards that are determined by PON information encoding schemes, such as PON MAC functionality and bandwidth, in an upstream and downstream direction. Accordingly, when upgrading or changing a network standard of a PON network, such as changing a MAC functionality characteristic and/or bandwidth of the PON network, existing ONT's must be replaced with ONT's compatible with the new network standard. The inventors of the present invention have innovatively developed a ONT that automatically recognizes and adapts to a change in a network standard of the PON network to which it is connected, such as when the PON network is upgraded. FIG. 1 shows an example embodiment of an adaptive ONT 12 of a PON 10 that automatically recognizes and adapts to a variety of PON formats, including PON transmission formats, such as bandwidth of a downstream signal 16, and PON content formats, such as MAC functionality. In an embodiment, the ONT 12 includes a receive adaptive processor 14 receiving a downstream signal 16 from an OLT 18 via an optical signal to electrical signal converter 20. The receive adaptive processor 14 is configured for automatically identifying a transmission format of the downstream signal 16 and for automatically adapting itself to recover data from the signal 16 according to the identified transmission format. The receive adaptive processor 14 may be in communication with a receive format memory 22 that may be used for storing different receive formats, such as different clock ranges and/or data ranges, that the ONT 12 may be expected to receive. In an aspect of the invention, the receive format memory 22 may be preloaded with different receive formats, such as prior to installation in a PON 10. In another aspect, the receive format memory 22may be updated or loaded remotely, for example, when already connected to a PON 10.

The receive adaptive processor 14 may include logic 15 executable by the processor 14 for sequentially comparing ones of the different content receive formats stored in the receive format memory 22 to a receive format of the downstream signal 16, such as a data or clock format of the downstream signal 16. The logic 15 may by configured for identifying a receive format match between at least one of the different receive formats and the receive format of the downstream signal 16. When a match is found, the logic 15 may be further configured for recovering data from the downstream signal 16 according to the receive format match and then providing the recovered data 24 to a downstream content adaptive processor 26.

The content adaptive processor 26 may be configured for automatically identifying a content format of the recovered data 24 and for automatically adapting itself to interpret the recovered data 24 according to the identified content format. For example the content adaptive processor 26 may be configured for identifying content format such as a MAC code of the downstream signal 16. The MAC code may include an OEM code and/or a signal synchronization that is recognizable by the content adaptive processor 26 to allow the processor 26 to determine a content format of the downstream signal 16 and then configure itself appropriately. The content adaptive processor 26 may be in communication with a content format memory 28 storing different content formats, such as different MAC codes that may be preloaded and/or updated or loaded remotely.

The content adaptive processor 26 may include logic 27 executable by the processor 26 for sequentially comparing ones of the different content formats stored in the content format memory 28 to a content format of the recovered data 24. The logic 27 may also be configured for identifying a content format match between one of the different content formats stored in content format memory 28 and the content format of the recovered data 24. When a match is found, the logic 27 may be further configured for providing content interpreted data 40 to a downstream data user 42, such as a cable modem subscriber, according to the content format match.

The content adaptive processor 26 may be further configured to adapt itself to a format a content of an upstream signal 30 responsive to the identified content format of the downstream signal 16. For example, the logic 27 executable by the processor 26 may be further configured for formatting a content of the upstream signal 30 responsive to the content format match. The logic 27 may be configured for accessing a look up table 36 in memory 28 storing a plurality of content formats corresponding to respective receive content formats to determine an appropriate upstream content format to be used.

A transmit format adaptive processor 32 may be provided for receiving a content formatted upstream signal 38 from the content format adaptive processor 26 and transmitting the upstream signal according to an upstream signal transmit property of the PON 10. For example, the transmit format adaptive processor 32 may include logic 33 executable by the processor 32 for configuring a transmit format of the content formatted upstream signal 38 responsive to the receive format match. In an embodiment, the processor 26 may configure the upstream transmit format according to format information provided in the downstream signal 16. In another embodiment, the processor 32 may configure the upstream transmit format by accessing a look up table 34 in memory 22 storing a plurality of transmit formats corresponding to respective receive formats to determine the appropriate upstream transmission format to be used.

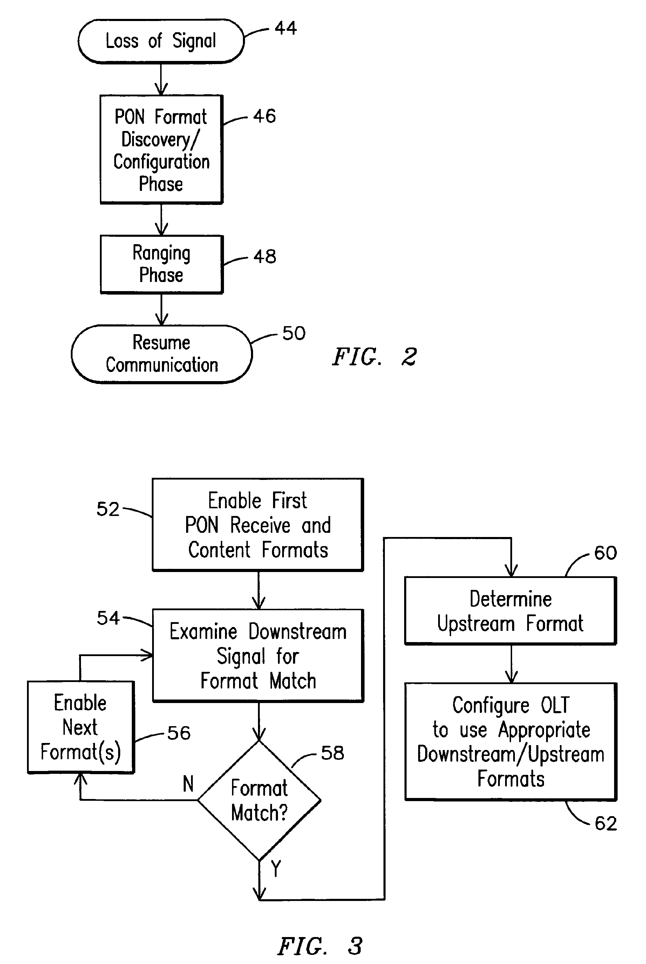

FIG. 2 illustrates an example process of PON format identification and adaptation that may be employed by the OLT of Figure 1. The process may begin for example, when a loss of optical signal is caused by an exchange of a first PON OLT with a second PON OLT that may have different PON link properties, such as receive format and/or content format properties 44. After exchange and reestablishment of a downstream signal 16 received by the OLT for the second OLT, the ONT begins a PON format discovery phase to determine upstream and downstream link properties associated with the second OLN 46. After the OLT identifies upstream and downstream properties of the new PON link, the OLT automatically configures itself according to the identified link properties and may then conduct conventional frequency ranging activities 48 and resume communications according to the new properties 50.

FIG. 3 illustrates in greater detail the discovery process of FIG. 2. The discovery phase may begin with the ONT sequencing through a number of attempts to discover the new PON link properties. In a first attempt, the ONT may enable first ones of a PON receive format and a PON content format 52 to be used in an attempt to match the corresponding formats of a new downstream signal 54. If no recognizable formats are found 56, such as if no synchronization or OAM cells are identified, for the first properties tried, a next content PON transmit format property and/or a PON content format property may be attempted to achieve a match with the downstream signal 58. This sequence may be repeated until a matching combination of transmit format and content format is found. After identifying the formats of the downstream signal, upstream signal formats may be determined 60. For example, an upstream transmission format, such as a bandwidth of the upstream signal may be determined by extracting the appropriate upstream signal format that has been previously encoded in the downstream signal. In another aspect, upstream/downstream format combinations may be provided, for example, in a look up table, so that the OLT can look up a specified upstream format associated with an identified downstream format. After the appropriate upstream formats are determined, the OLT may be configured to use these formats, such as a certain MAC code and a certain burst mode, to generate a properly formatted upstream signal. After configuring itself for receipt and transmission under a new PON scheme 62, the OLT may operate to receive and transmit information across the PON network.

Based on the foregoing specification, the methods described may be implemented using computer programming or engineering techniques including computer software, firmware, hardware or any combination or subset thereof, wherein the technical effect is to provide an adaptive ONT for automatically accommodating different types of PON networks. Any such resulting program, having computer-readable code means, may be embodied or provided within one or more computer-readable media, thereby making a computer program product, i.e., an article of manufacture, according to the invention. The computer readable media may be, for instance, a fixed (hard) drive, diskette, optical disk, magnetic tape, semiconductor memory such as read-only memory (ROM), etc., or any transmitting/receiving medium such as the Internet or other communication network or link. The article of manufacture containing the computer code may be made and/or used by executing the code directly from one medium, by copying the code from one medium to another medium, or by transmitting the code over a network.

One skilled in the art of computer science will easily be able to combine the software created as described with appropriate general purpose or special purpose computer hardware, such as a processors 14, 26, 32, to create a computer system or computer sub-system embodying the method of the invention. An apparatus for making, using or selling the invention may be one or more processing systems including, but not limited to, a central processing unit (CPU), memory, storage devices, communication links and devices, I/O devices, or any sub-components of one or more processing systems, including software, firmware, hardware or any combination or subset thereof, which embody the invention.

While various embodiments of the present invention have been shown and described herein, it will be obvious that such embodiments are provided by way of example only. Numerous variations, changes and substitutions may be made without departing from the invention herein.

## Claims

1. A method for recognizing and adapting to a change in a passive optical network/PON (10) format by an optical network terminal/ONT (12) in communication with an optical line terminal/OLT (18) over the PON (10), comprising and **characterized by:**
pre-loading a plurality of transmission formats and content formats into an individual ONT (12);
automatically identifying at the ONT (12) a transmission format of a downstream signal (16) transmitted over a PON (10) from an OLT (18) to the ONT (12) corresponding to at least one of the preloaded transmission formats,
automatically identifying at the ONT (12) a content format of the downstream signal (16) corresponding to at least one of the preloaded content formats; and automatically adapting the ONT (12) to recover information from the downstream signal (16) according to the identified transmission format and the identified content format.

2. The method of claim 1, **characterized by**, further comprising automatically adapting the ONT (12) to transmit an upstream signal (30) to the OLT (18) responsive to the identified transmission format and the identified content format.

3. The method of claim 2, **characterized by**, wherein adapting the ONT (12) to transmit an upstream signal (30) according to the identified transmission format comprises configuring the ONT (12) to transmit in a transmit burst mode encoded in the downstream signal.

4. The method of claim 2, **characterized by**, wherein adapting the ONT (12) to transmit an upstream signal (30) according to the identified transmission format comprises configuring the ONT (12) to transmit at a predetermined transmit burst mode corresponding to the identified transmission format.

5. The method of claim 4, **characterized by**, wherein adapting the ONT (12) to transmit an upstream signal (30) responsive to the identified transmission format further comprises accessing a look-up table (34) to retrieve the predetermined transmit burst mode corresponding to the identified transmission format.

6. The method of claim 1, **characterized by**, wherein identifying the transmission format comprises recognizing at least one of a clock format or a data format of the downstream signal (16).

7. The method of claim 1, **characterized by**, wherein identifying the content format comprises recognizing a media access control / MAC code in the downstream signal (16).

8. The method of claim 7, **characterized by**, wherein identifying a MAC code comprises recognizing an operation, administration, and management / OAM code in the MAC code.

9. The method of claim 4, **characterized by**, wherein identifying a MAC code comprises recognizing a synchronization code in the MAC code.

10. An optical network terminal / ONT (12) of a passive optical network / PON (10) for recognizing and adapting to a change in a PON format, comprising and **characterized by:**
a receive adaptive unit (14) for automatically identifying a transmission format of a downstream signal (16) received at the ONT (12) and for automatically adapting itself to recover data from the signal according to the identified transmission format; and
a content adaptive unit (26) for automatically identifying a content format of the recovered data (24) provided by the receive adaptive unit (14) and for automatically adapting itself to interpret the recovered data (24) according to the identified content format.

11. The ONT (12) of claim 10, **characterized by**, wherein the receive adaptive unit (14) is configured for identifying at least one of a clock format and a data format of the downstream signal (16).

12. The ONT (12) of claim 10, **characterized by**, wherein the content adaptive unit (26) is further configured for formatting a content of an upstream signal to be transmitted from the ONT (12) responsive to the identified content format of the recovered data (24).

13. The ONT (12) of claim 12, **characterized by**, further comprising a transmit adaptive unit (32) for configuring a transmission format of the content formatted upstream signal (38) responsive the identified transmission format.

14. The ONT (12) of claim 10, **characterized by**, further comprising a data table accessible by the receive adaptive unit (14) to store the identified transmission format and accessible by the transmit adaptive unit (32) to retrieve a predetermined transmission format corresponding to the identified transmission format.

15. The ONT (12) of claim 10, **characterized by**, wherein the content format comprises a media access control / MAC code.

16. The ONT (12) of claim 15, **characterized by**, wherein the MAC code comprises a signal synchronization code.

17. The ONT (12) of claim 15, **characterized by**, wherein the MAC code comprises an operations, administration, and management / OEM code.

18. The ONT (12) of claim 10, **characterized by**, wherein the content adaptive unit comprises:
a content adaptive processor (26) receiving data recovered from a downstream signal (16) received at the ONT (12) from an upstream optical line terminal / OLT (18);
a content format memory (28) in communication with the content adaptive processor (26) for storing different content formats;
logic executable (27) by the content adaptive processor (26) for sequentially comparing ones of the different content formats stored in the content format memory (28) to a content format of the data recovered (24) from the downstream signal (16), for identifying a content format match between one of the different content formats stored in content format memory (28) and the content format of the data recovered (24) from the downstream signal (16), and for providing content interpreted data (40) to a downstream data user (42) according to the content format match.

19. The ONT (12) of claim 18, **characterized by**, wherein the different content formats are preloaded into the content format memory.

20. The ONT (12) of claim 10, **characterized by**, wherein the receive adaptive unit comprises:
a receive adaptive processor (14) receiving the downstream signal (16) from the OLT.

21. The ONT (12) of claim 20, **characterized by**, further comprising a receive format memory (22) in communication with the receive adaptive processor (14) for storing different receive formats.

22. The ONT (12) of claim 21, **characterized by,** further comprising logic executable (15) by the receive adaptive processor (14) for sequentially comparing ones of the different content receive formats stored in receive format memory (22) to a receive format of the downstream signal (16); for identifying a receive format match between at least one of the different receive formats and the receive format of the downstream signal (16), and for providing recovered data (24) to the content adaptive processor (26) according to the receive format match.

23. The ONT (12) of claim 21, **characterized by**, wherein the different receive formats are preloaded into the receive format memory (22).

24. The ONT (12) of claim 21, **characterized by**, wherein the receive format memory (22) further comprises a look up table (34) storing a plurality of transmit formats corresponding to respective receive formats.

25. The ONT (12) of claim 22, **characterized by**, further comprising logic executable (27) by the content adaptive processor (26) for formatting a content of an upstream signal (30) to be transmitted from the ONT (12) according to the content format match.

26. The ONT (12) of claim 25, **characterized by,** further comprising:
a transmit format adaptive processor (32) receiving a content formatted upstream signal (38) from the content format adaptive processor (26); and
logic executable (33) by the transmit format adaptive processor (32) for configuring a transmission format of the content formatted upstream signal (38) responsive to the receive format match.

27. The ONT (12) of claim 26, **characterized by**, wherein the transmit format adaptive processor (32) is in communication with a look up table (34) stored in the content format memory (22) to retrieve a transmit format associated with the receive format of the downstream signal (16).

## Patentansprüche

1. Verfahren für das Erkennen einer Veränderung und Anpassen an eine Veränderung in einem PON-Format (PON - Passive Optical Network) (10) durch einen optischen Netzabschluss (ONT - Optical Network Terminal) (12), der über das PON (10) mit einem optischen Leitungsabschluss (OLT - Optical Line Terminal) (18) verbunden ist, welches Folgendes umfasst und durch Folgendes **gekennzeichnet** ist:
Laden mehrerer Übertragungsformate und Inhaltsformate im Vorhinein in einen einzelnen ONT (12),
automatisches Identifizieren eines Übertragungsformats eines Downstream-Signals (16), das von einem OLT (18) über ein PON (10) zu dem ONT (12) übertragen wird, am ONT (12), wobei das Übertragungsformat zumindest einem der im Vorhinein geladenen Übertragungsformate entspricht,
automatisches Identifizieren eines Inhaltsformats des Downstream-Signals (16) am ONT (12), das zumindest einem der im Vorhinein geladenen Inhaltsformate entspricht, und
automatisches Anpassen des ONT (12) zum Rückgewinnen von Informationen aus dem Downstream-Signal (16) entsprechend dem identifizierten Übertragungsformat und Inhaltsformat.

2. Verfahren nach Anspruch 1, **dadurch gekennzeichnet, dass** es ferner das automatische Anpassen des ONT (12) für das Übertragen eines Upstream-Signals (30) zum OLT (18) als Reaktion auf das identifizierte Übertragungsformat und Inhaltsformat umfasst.

3. Verfahren nach Anspruch 2, **dadurch gekennzeichnet, dass** das Anpassen des ONT (12) für das Übertragen eines Upstream-Signals (30) entsprechend dem identifizierten Übertragungsformat das Konfigurieren des ONT (12) für das Übertragen in einem im Downstream-Signal codierten Übertragungsburstmodus umfasst.

4. Verfahren nach Anspruch 2, **dadurch gekennzeichnet, dass** das Anpassen des ONT (12) für das Übertragen eines Upstream-Signals (30) entsprechend dem identifizierten Übertragungsformat das Konfigurieren des ONT (12) für das Übertragen in einem vorgegebenen Übertragungsburstmodus entsprechend dem identifizierten Übertragungsformat umfasst.

5. Verfahren nach Anspruch 4, **dadurch gekennzeichnet, dass** das Anpassen des ONT (12) für das Übertragen eines Upstream-Signals (30) als Reaktion auf das identifizierte Übertragungsformat ferner das Zugreifen auf eine Nachschlagtabelle (34) umfasst, um den dem identifizierten Übertragungsformat entsprechenden vorgegebenen Übertragungsburstmodus abzurufen.

6. Verfahren nach Anspruch 1, **dadurch gekennzeichnet, dass** das Identifizieren des Übertragungsformats zumindest das Erkennen eines Taktformats oder Datenformats des Downstream-Signals (16) umfasst.

7. Verfahren nach Anspruch 1, **dadurch gekennzeichnet, dass** das Identifizieren des Inhaltsformats das Erkennen eines MAC-Codes (MAC - Media Access Control) in dem Downstream-Signal (16) umfasst.

8. Verfahren nach Anspruch 7, **dadurch gekennzeichnet, dass** das Identifizieren eines MAC-Codes das Erkennen eines OAM-Codes (OAM - Operation, Administration and Management) in dem MAC-Code umfasst.

9. Verfahren nach Anspruch 4, **dadurch gekennzeichnet, dass** das Identifizieren eines MAC-Codes das Erkennen eines Synchronisationscodes in dem MAC-Code umfasst.

10. Optischer Netzabschluss (ONT - Optical Network Terminal) (12) eines passiven optischen Netzes (PON - Passive Optical Network) (10) für das Erkennen und Anpassen an eine Veränderung in einem PON-Format, der Folgendes umfasst und durch Folgendes **gekennzeichnet** ist:
eine Empfangsanpassungseinheit (14) zum automatischen Identifizieren eines Übertragungsformats eines Downstream-Signals (16), das am ONT (12) empfangen wurde, und zum automatischen Selbstanpassen für das Rückgewinnen von Daten aus dem Signal entsprechend dem identifizierten Übertragungsformat sowie eine Inhaltsanpassungseinheit (26) zum automatischen Identifizieren eines Inhaltsformats der von der Empfangsanpassungseinheit (14) bereitgestellten rückgewonnenen Daten (24) und zum automatischen Selbstanpassen für das Interpretieren der rückgewonnenen Daten (24) entsprechend dem identifizierten Inhaltsformat.

11. ONT (12) nach Anspruch 10, **dadurch gekennzeichnet, dass** die Empfangsanpassungseinheit (14) zumindest für das Identifizieren eines Taktformats oder Datenformats des Downstream-Signals (16) konfiguriert ist.

12. ONT (12) nach Anspruch 10, **dadurch gekennzeichnet, dass** die Inhaltsanpassungseinheit (26) ferner für das Formatieren eines Inhalts eines Upstream-Signals konfiguriert ist, das von dem ONT (12) als Reaktion auf das identifizierte Inhaltsformat der rückgewonnenen Daten (24) übertragen werden soll.

13. ONT (12) nach Anspruch 12, **dadurch gekennzeichnet, dass** er ferner eine Übertragungsanpassungseinheit (32) für das Konfigurieren eines Übertragungsformats des inhaltsformatierten Upstream-Signals (38) als Reaktion auf das identifizierte Übertragungsformat umfasst.

14. ONT (12) nach Anspruch 10, **dadurch gekennzeichnet, dass** er ferner eine Datentabelle umfasst, auf die die Empfangsanpassungseinheit (14) zum Speichern des identifizierten Übertragungsformats und die Übertragungsanpassungseinheit (32) zum Aufrufen eines vorgegebenen Übertragungsformats entsprechend dem identifizierten Übertragungsformat zugreifen können.

15. ONT (12) nach Anspruch 10, **dadurch gekennzeichnet, dass** das Inhaltsformat einen MAC-Code (MAC - Media Access Control) umfasst.

16. ONT (12) nach Anspruch 15, **dadurch gekennzeichnet, dass** der MAC-Code einen Signalsynchronisationscode umfasst.

17. ONT (12) nach Anspruch 15, **dadurch gekennzeichnet, dass** der MAC-Code einen OEM-Code (OEM - Operations, Administration and Management) umfasst.

18. ONT (12) nach Anspruch 10, **dadurch gekennzeichnet, dass** die Inhaltsanpassungseinheit Folgendes umfasst:
einen Inhaltsanpassungsprozessor (26), der rückgewonnene Daten aus einem Downstream-Signal (16) empfängt, das am ONT (12) von einem vorgeschalteten optischen Leitungsabschluss (OLT - Optical Line Terminal) (18) empfangen wird,
einen Inhaltsformatspeicher (28) zum Speichern verschiedener Inhaltsformate, der mit dem Inhaltsanpassungsprozessor (26) verbunden ist,
von dem Inhaltsanpassungsprozessor (26) auszuführende (27) Logik für das nacheinander erfolgende Vergleichen verschiedener einzelner in dem Inhaltsformatspeicher (28) gespeicherter Inhaltsformate mit einem Inhaltsformat der aus dem Downstream-Signal (16) rückgewonnenen (24) Daten, für das Identifizieren einer Inhaltsformatübereinstimmung zwischen einem der verschiedenen in dem Inhaltsformatspeicher (28) gespeicherten Inhaltsformate und dem Inhaltsformat der aus dem Downstream-Signal (16) rückgewonnenen (24) Daten und für das Bereitstellen von interpretierten Inhaltsdaten (40) für einen nachgeschalteten Datennutzer (42) entsprechend der Inhaltsformatübereinstimmung.

19. ONT (12) nach Anspruch 18, **dadurch gekennzeichnet, dass** die verschiedenen Inhaltsformate im Vorhinein in den Inhaltsformatspeicher geladen werden.

20. ONT (12) nach Anspruch 10, **dadurch gekennzeichnet, dass** die Empfangsanpassungseinheit Folgendes umfasst: einen Empfangsanpassungsprozessor (14), der das Downstream-Signal (16) vom OLT empfängt.

21. ONT (12) nach Anspruch 20, **dadurch gekennzeichnet, dass** er ferner einen Empfangsformatspeicher (22) zum Speichern verschiedener Empfangsformate umfasst, der mit dem Empfangsanpassungsprozessor (14) verbunden ist.

22. ONT nach Anspruch 21, **dadurch gekennzeichnet, dass** er ferner von dem Empfangsanpassungsprozessor (14) auszuführende (15) Logik für das nacheinander erfolgende Vergleichen verschiedener einzelner in dem Empfangsformatspeicher (22) gespeicherter Empfangsformate mit einem Empfangsformat des Downstream-Signals (16), für das Identifizieren einer Empfangsformatübereinstimmung zwischen mindestens einem der verschiedenen Empfangsformate und dem Empfangsformat des Downstream-Signals (16) und für das Bereitstellen von rückgewonnenen Daten (24) für den Inhaltsanpassungsprozessor (26) entsprechend der Empfangsformatübereinstimmung umfasst.

23. ONT (12) nach Anspruch 21, **dadurch gekennzeichnet, dass** die verschiedenen Empfangsformate im Vorhinein in den Empfangsformatspeicher (22) geladen werden.

24. ONT (12) nach Anspruch 21, **dadurch gekennzeichnet, dass** der Empfangsformatspeicher (22) ferner eine Nachschlagetabelle (34) umfasst, in der mehrere den jeweiligen Empfangsformaten entsprechende Übertragungsformate gespeichert sind.

25. ONT (12) nach Anspruch 22, **dadurch gekennzeichnet, dass** er ferner von dem Inhaltsanpassungsprozessor (26) ausführbare Logik für das Formatieren eines Inhalts eines Upstream-Signals (30), das von dem ONT (12) übertragen werden soll, entsprechend der Inhaltsformatübereinstimmung umfasst.

26. ONT (12) nach Anspruch 25, **dadurch gekennzeichnet, dass** er ferner Folgendes umfasst:
einen Übertragungsformatanpassungsprozessor (32), der ein inhaltsformatiertes Upstream-Signal (38) von dem Inhaltsformatanpassungsprozessor (26) empfängt, und
von dem Übertragungsformatanpassungsprozessor (32) ausführbare (33) Logik für das Konfigurieren eines Übertragungsformats des inhaltsformatierten Upstream-Signals (38) als Reaktion auf die Empfangsformatübereinstimmung.

27. ONT (12) nach Anspruch 26, **dadurch gekennzeichnet, dass** der Übertragungsformatanpassungsprozessor (32) zum Aufrufen eines mit dem Empfangsformat des Downstream-Signals (16) assoziierten Übertragungsformats mit einer Nachschlagetabelle (34) verbunden ist, die in dem Inhaltsformatspeicher (22) gespeichert ist.

## Revendications

1. Procédé de reconnaissance et d'adaptation à un changement d'un format de réseau optique passif/ROP (10) par un terminal de réseau optique/TRO (12) en communication avec un terminal de ligne optique/TLO (18) sur le ROP (10), comprenant et **caractérisé par** :
le pré-chargement d'une pluralité de formats d'émission et de formats de contenus dans un TRO individuel (12) ;
l'identification automatique, au niveau du TRO (12), d'un format d'émission d'un signal descendant (16) transmis sur un ROP (10) d'un TLO (18) vers le TRO (12) correspondant à au moins un des formats d'émission préchargés,
l'identification automatique, au niveau du TRO (12), d'un format de contenu du signal descendant (16) correspondant à au moins un des formats de contenus préchargés ; et
l'adaptation automatique du TRO (12) pour récupérer des informations à partir du signal descendant (16) en fonction du format d'émission identifié et du format de contenu identifié.

2. Procédé selon la revendication 1, **caractérisé en ce qu'**il comprend, en outre, l'adaptation automatique du TRO (12) pour transmettre un signal montant (30) au TLO (18) en réponse au format d'émission identifié et au format de contenu identifié.

3. Procédé selon la revendication 2, **caractérisé en ce que** l'adaptation du TRO (12) pour transmettre un signal montant (30) en fonction du format d'émission identifié comprend la configuration du TRO (12) pour transmettre dans un mode d'émission par salves codé dans le signal descendant.

4. Procédé selon la revendication 2, **caractérisé en ce que** l'adaptation du TRO (12) pour transmettre un signal montant (30) en fonction du format d'émission identifié comprend la configuration du TRO (12) pour transmettre selon un mode d'émission par salves prédéterminé correspondant au format d'émission identifié.

5. Procédé selon la revendication 4, **caractérisé en ce que** l'adaptation du TRO (12) pour transmettre un signal montant (30) en réponse au format d'émission identifié comprend, en outre, l'accès à une table de consultation (34) pour retrouver le mode d'émission par salves prédéterminé correspondant au format d'émission identifié.

6. Procédé selon la revendication 1, **caractérisé en ce que** l'identification du format d'émission comprend la reconnaissance d'au moins un format entre un format d'horloge ou un format de données du signal descendant (16).

7. Procédé selon la revendication 1, **caractérisé en ce que** l'identification du format de contenu comprend la reconnaissance d'un code de commande d'accès au support/MAC dans le signal descendant (16).

8. Procédé selon la revendication 7, **caractérisé en ce que** l'identification d'un code MAC comprend la reconnaissance d'un code d'opération, administration et gestion/OAM dans le code MAC.

9. Procédé selon la revendication 4, **caractérisé en ce que** l'identification d'un code MAC comprend la reconnaissance d'un code de synchronisation dans le code MAC.

10. Terminal de réseau optique/TRO (12) d'un réseau optique passif/ROP (10) pour la reconnaissance et l'adaptation à un changement d'un format ROP, comprenant et **caractérisé par** :
une unité adaptative de réception (14) destinée à identifier automatiquement un format d'émission d'un signal descendant (16) reçu au niveau du TRO (12) et à s'adapter automatiquement pour récupérer des données à partir du signal en fonction du format d'émission identifié ; et
une unité adaptative de contenu (26) destinée à identifier automatiquement un format de contenu des données récupérées (24) fournies par l'unité adaptative de réception (14) et à s'adapter automatiquement pour interpréter les données récupérées (24) en fonction du format de contenu identifié.

11. TRO (12) selon la revendication 10, **caractérisé en ce que** l'unité adaptative de réception (14) est configurée pour identifier au moins un format entre un format d'horloge et un format de données du signal descendant (16).

12. TRO (12) selon la revendication 10, **caractérisé en ce que** l'unité adaptative de contenu (26) est configurée, en outre, pour formater un contenu d'un signal montant devant être émis par le TRO (12) en réponse au format de contenu identifié des données récupérées (24).

13. TRO (12) selon la revendication 12, **caractérisé en ce qu'**il comprend, en outre, une unité adaptative d'émission (32) pour configurer un format d'émission du signal montant à contenu formaté (38) en réponse au format d'émission identifié.

14. TRO (12) selon la revendication 10, **caractérisé en ce qu'**il comprend, en outre, une table de données à laquelle peut accéder l'unité adaptative de réception (14) pour stocker le format d'émission identifié et à laquelle peut accéder l'unité adaptative d'émission (32) pour retrouver un format d'émission prédéterminé correspondant au format d'émission identifié.

15. TRO (12) selon la revendication 10, **caractérisé en ce que** le format de contenu comprend un code de commande d'accès au support/MAC.

16. TRO (12) selon la revendication 15, **caractérisé en ce que** le code MAC comprend un code de synchronisation de signal.

17. TRO (12) selon la revendication 15, **caractérisé en ce que** le code MAC comprend un code d'opération, administration et gestion/OEM.

18. TRO (12) selon la revendication 10, **caractérisé en ce que** l'unité adaptative de contenu comprend :
un processeur adaptatif de contenu (26) recevant des données récupérées à partir d'un signal descendant (16) reçu au niveau du TRO (12) depuis un terminal de ligne optique/TLO (18) en amont ;
une mémoire de formats de contenus (28) en communication avec le processus adaptatif de contenu (26) pour stocker différents formats de contenus ;
une logique exécutable (27) par le processeur adaptatif de contenu (26) pour effectuer une comparaison séquentielle de certains des différents formats de contenus stockés dans la mémoire de formats de contenus (28) avec un format de contenu des données récupérées (24) à partir du signal descendant (16), pour identifier une correspondance de format de contenu entre un des différents formats de contenus stockés dans la mémoire de formats de contenus (28) et le format de contenu des données récupérées (24) à partir du signal descendant (16) et pour fournir des données à contenu interprété (40) à un utilisateur de données en aval (42) en fonction de la correspondance entre les formats de contenu.

19. TRO (12) selon la revendication 18, **caractérisé en ce que** les différents formats de contenus sont préchargés dans une mémoire de formats de contenus.

20. TRO (12) selon la revendication 10, **caractérisé en ce que** l'unité adaptative de réception comprend :
un processeur adaptatif de réception (14) recevant le signal descendant (16) du TLO.

21. TRO (12) selon la revendication 20, **caractérisé en ce qu'**il comprend, en outre, une mémoire de formats de réception (22) en communication avec le processeur adaptatif de réception (14) pour stocker différents formats de réception.

22. TRO (12) selon la revendication 21, **caractérisé en ce qu'**il comprend, en outre, une logique exécutable (15) par le processeur adaptatif de réception (14) pour effectuer une comparaison séquentielle de certains des différents formats de réception de contenu stockés dans la mémoire de formats de réception (22) avec un format de réception du signal descendant (16) ; pour identifier une correspondance de format de réception entre au moins un des différents formats de réception et le format de réception du signal descendant (16) et pour fournir des données récupérées (24) au processeur adaptatif de contenu (26) en fonction de la correspondance entre les formats de réception.

23. TRO (12) selon la revendication 21, **caractérisé en ce que** les différents formats de réception sont préchargés dans la mémoire de formats de réception (22).

24. TRO (12) selon la revendication 21, **caractérisé en ce que** la mémoire de formats de réception (22) comprend, en outre, une table de consultation (34) stockant une pluralité de formats d'émission correspondant aux formats de réception respectifs.

25. TRO (12) selon la revendication 22, **caractérisé en ce qu'**il comprend, en outre, une logique exécutable (27) par le processeur adaptatif de contenu (26) pour formater un contenu d'un signal montant (30) devant être émis par le TRO (12) en fonction de la correspondance entre les formats de contenus.

26. TRO (12) selon la revendication 25, **caractérisé en ce qu'**il comprend, en outre :
un processeur adaptatif de format d'émission (32) recevant un signal montant à contenu formaté (38) du processeur adaptatif de format de contenu (26) ; et
une logique exécutable (33) par le processeur adaptatif de format d'émission (32) pour configurer un format d'émission du signal montant à contenu formaté (38) en réponse à la correspondance entre les formats de réception.

27. TRO (12) selon la revendication 26, **caractérisé en ce que** le processeur adaptatif de format d'émission (32) est en communication avec une table de consultation (34) stockée dans la mémoire de formats de contenus (22) pour retrouver un format d'émission associé au format de réception du signal descendant (16).
